# EUROPEAN PATENT APPLICATION

(11) **EP 3 996 384 A1**
(43) Date of publication of application: **11.05.2022**
(21) Application number: 20205585.1
(22) Date of filing: 04.11.2020
(51) Int. Cl.: H04R 1/10, H04R 1/08, H04R 25/00

(54) **CHARGER AND CHARGING SYSTEM FOR HEARING DEVICES**

(71) Applicant: Sonova AG, 8712 Stäfa (CH)
(72) Inventor: PERRI, Antonio, 1568 Portalban (CH); WICHT, Josuah, 1732 Arconciel (CH)
(74) Representative: Liedtke & Partner Patentanwälte

(57) **Abstract**

The invention relates to a charger (1) and a charging system for charging one or more hearing devices (2), wherein the charger (1) comprises a charging bay configured to receive the one or more hearing devices (2) for charging and/or storage, one or more microphones (3) and a radio transceiver (4) configured for wireless communication with the one or more hearing devices (2), wherein the charger (1) is configured to either work in a charging mode charging the one or more hearing devices (2) or in a table microphone mode forwarding audio data picked up by the one or more microphones (3) to the one or more hearing devices (2) by the radio transceiver (4) if at least one table microphone mode condition is met including that the one or more hearing devices (2) are outside the charging bay.

## Description

### Technical Field

The invention relates to a charging system according to claim 1 and to a charger for hearing devices according to claim 15.

### Background of the Invention

A hearing device may be used to improve the hearing capability or communication capability of a user, for instance by compensating a hearing loss of a hearing-impaired user, in which case the communication device is commonly referred to as a hearing instrument, such as a hearing aid, or hearing prosthesis. A hearing device may also be used to produce a sound in a user's ear canal. For example, sound may be communicated by a wire or wirelessly to a hearing device, which may reproduce the sound in the user's ear canal. For example, earbuds, earphones and/or the like may be used to generate sound in a person's ear canal.

Hearing devices are generally small and complex devices. Hearing devices can include a processor, microphone, speaker, memory, housing, and other electronical and mechanical components. Some example hearing devices are Behind-The-Ear ("BTE"), Receiver-in-Canal ("RIC"), In-The-Ear ("ITE"), Completely-In-Canal ("CIC"), and Invisible-In-The-Canal ("IIC") devices. A user can prefer one of these hearing devices compared to another device based on hearing loss, aesthetic preferences, lifestyle needs, and budget. Hearing devices are often very small so that at least a part of the hearing device can be inserted into a user's ear canal to provide for reproduction of sound proximal to the user's eardrum.

As hearing device technology develops, users prefer hearing devices with more functionality. For example, users want hearing devices that are configured to communicate wirelessly. Wireless communication improves a user's experience and enables the user to access a network or other devices with their hearing device. Additionally, users want hearing devices that have a long battery life (e.g., several days or even weeks) and that need little/infrequent maintenance.

In many instances, the hearing device uses a microphone to pick up/receive sound. Circuitry in the hearing instrument can process signals from the microphone, and provide the processed sound signal into the ear canal of the user via a miniature loudspeaker, commonly referred to as a sound reproduction device or a receiver. As noted previously, some hearing devices may receive sound signals from alternative input sources, such as an induction coil and/or a wireless transmitter, for example via a mobile phone, wireless streaming, Bluetooth connection and/or external wireless microphone arrays and the like, and process these sounds signals and deliver them to the user.

### Summary of the Invention

It is an object of the present invention to provide an improved solution to enhance the perception of sound for a user wearing a hearing device.

The object is achieved by a charging system for charging one or more hearing devices according to claim 1 and by a charger for charging one or more hearing devices according to claim 15.

Advantageous embodiments of the invention are given in the dependent claims.

According to the invention a charging system comprises a charger for charging one or more hearing devices comprises a charging bay configured to receive the one or more hearing devices for charging and/or storage, one or more microphones and a radio transceiver configured for wireless communication with the one or more hearing devices, wherein the charger is configured to either work in a charging mode charging the one or more hearing devices or in a table microphone mode forwarding audio data picked up by the one or more microphones to the one or more hearing devices by the radio transceiver if at least one table microphone mode condition is met including that the one or more hearing devices are outside the charging bay.

In an exemplary embodiment the charging system may comprise one or more hearing devices.

In an exemplary embodiment the charger is configured for charging the one or more hearing devices in a wireless way or using galvanic contacts.

In an exemplary embodiment the charger comprises a base and a lid configured to be opened to allow inserting or removing the one or more hearing devices into the charging bay which is located in the base.

In an exemplary embodiment, in charging mode, the radio transceiver is configured to establish a wireless link between the charger and the one or more hearing devices to control a charging procedure if at least one charging mode condition is met including that the one or more hearing devices are inside the loading bay.

In an exemplary embodiment another charging mode condition is that the lid is open.

In an exemplary embodiment, the charging system comprises a visual indicator configured to indicate a mode of operation of the charging system, e.g. the charging mode and/or the table microphone mode. The visual indicator may for example be arranged in the charger.

In an exemplary embodiment another table microphone mode condition is that the one or more hearing devices are worn by a user.

In an exemplary embodiment another table microphone mode condition is that the lid is closed.

In an exemplary embodiment, in table microphone mode, the charger is furthermore configured to work as an audio streamer, streaming audio data from an audio master device to the one or more hearing devices.

In an exemplary embodiment, in charging mode, the charger is configured to use the wireless link to program the one of more hearing devices and/or to allow the one or more hearing devices to download and/or upload data.

In an exemplary embodiment the charger further comprises a battery and/or is connectable to an energy source by cable or in a wireless fashion.

In an exemplary embodiment the radio transceiver is configured to use Bluetooth Low Energy (BLE) for communicating with the one or more hearing devices in charging mode and configured to use a different digital communication protocol for wireless communication in table microphone mode.

In an exemplary embodiment the charger comprises one or more digital sound processors for processing sound data picked up by the one or microphones prior to forwarding them to the one or more hearing devices.

In an exemplary embodiment the digital sound processor is configured to reduce ambient noise and/or enhance a signal of interest and/or apply gains to the signal of interest and/or to be focussed on sound sources in one or more directions.

In an exemplary embodiment the visual indicator may be an optical indicator configured to indicate that the table microphone mode is active.

In an exemplary embodiment, a charger for a charging system is configured for charging one or more hearing devices, wherein the charger comprises a charging bay configured to receive the one or more hearing devices for charging and/or storage, one or more microphones and a radio transceiver configured for wireless communication with the one or more hearing devices, wherein the charger is configured to either work in a charging mode charging the one or more hearing devices or in a table microphone mode forwarding audio data picked up by the one or more microphones to the one or more hearing devices by the radio transceiver if at least one table microphone mode condition is met including that the one or more hearing devices are outside the charging bay.

In an exemplary embodiment, the charger may be part of a hearing aid kit, further comprising one or more hearing devices.

With conventional solutions, additional products such as external microphones need to be purchased in addition to hearing aids bundles to overcome speech-in-noise limitations. This may not be required with the solution according to the present invention as with hearing devices having rechargeable batteries a charger may be required anyway.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitive of the present invention, and wherein:
- Figure 1: is a schematic view of an exemplary embodiment of a charger for charging one or more hearing devices, wherein a lid is open,
- Figure 2: is a schematic view of the charger with the lid closed,
- Figure 3: is a schematic view of the charger and its components, and
- Figure 4: is another schematic view of the charger with the lid closed.

Corresponding parts are marked with the same reference symbols in all figures.

### Detailed Description of Preferred Embodiments

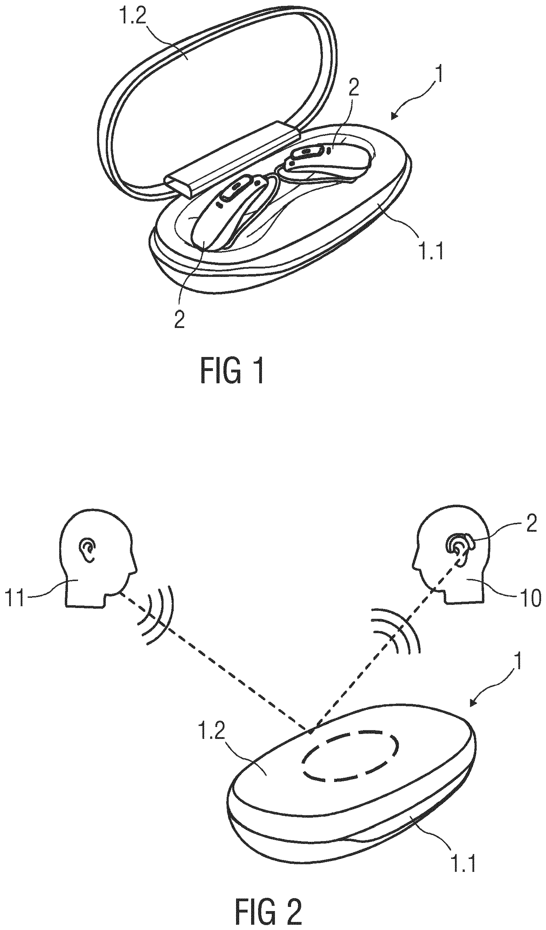

**Figure 1** is a schematic view of an exemplary embodiment of a charger 1 for charging one or more hearing devices 2, wherein a lid 1.2 of the charger 1 is open and the hearing devices 2 are placed within the charger 1.

**Figure 2** is a schematic view of the charger 1 with the lid 1.2 closed.

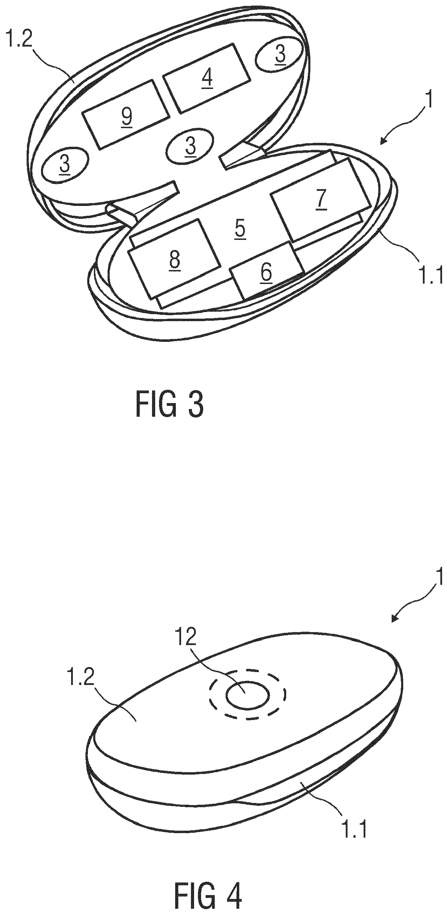

**Figure 3** is a schematic view of the charger 1 and its components. **Figure 4** is yet another schematic view of the charger 1 with the lid 1.2 closed.

The present invention proposes a solution to integrate wireless microphone functionalities into a charger 1, e.g. a charging case, for charging one or more rechargeable hearing devices 2. A low latency audio streaming system between the hearing device 2 and the charger 1 may increase the signal to noise ratio and thus improve speech clarity when a conversation occurs in loud ambient noise.

The one or more hearing devices 2, e.g. hearing aids, may be placed into the charger 1, e.g. into a charging bay thereof, for being stored and for charging a battery of the hearing device 2. The same charging bay might be compatible with different hearing devices' form factors. In an exemplary embodiment the battery charging may be achieved by wireless charging. In another embodiment, the charger 1 may work as a sanitiser to disinfect and germ sterilise the hearing devices 2, e.g. using ultraviolet techniques. The charger 1 also comprises one or more microphones 3, e.g. three or more microphones 3, a radio transceiver 4, e.g. a 2.4 GHz radio transceiver and an RF antenna (not shown). The charger 1 may thus be used as an auxiliary wireless microphone for the hearing device 2, which also comprises a radio transceiver (not shown), e.g. a 2.4 GHz radio transceiver. Likewise, the charger 1 may communicate with the one or more hearing devices 2 when they are located in the charger 1 and perform over-the-air firmware updates or other data transfers, programming or debug services, e.g. using the radio transceiver 4 or another integrated circuit such as a micro controller 8. The same integrated circuit or the radio transceiver 4 can also be used to control a charging profile through a dedicated protocol. The combination of all these functionalities in a single device is advantageous for the user 10. A single integrated circuit such as the radio transceiver 4 may be used to provide the wireless link with the one or more hearing devices 2 when they are in the charger 1 as well as when they are outside of it.

The charger 1 may include a battery 5 and/or be connectable to an energy source by cable. For this purpose, the charger 1 may comprise a socket 6, e.g. a USB C socket. In an alternative embodiment or in addition the charger 1 may be connectable to an energy source in a wireless fashion. Moreover, the charger 1 may comprise charging circuitry 7. Furthermore, the charger 1 may comprise a micro controller 8 to control the other electronic components. In an embodiment the microcontroller 8 has also digital signal processing functionalities to process the audio signal.

In an exemplary embodiment, the charger 1 may be equipped with one or more microphones 3.

In an exemplary embodiment, the charger 1 comprises a base 1.1 and a lid 1.2 which has to be opened to allow inserting or removing the one or more hearing devices 2. The lid 1.2 may be attached to the base 1.1 by a hinge pin so that the lid 1.2 can be swung open or by a slider mechanism so that the lid 1.2 can be slid to reveal the charging bay.

If the lid 1.2 is open, the one or more hearing devices 2 may be inserted into the charger 1 and a wireless link may be established between the charger 1 and the one or more hearing devices 2 to control the charging procedure. Furthermore, the wireless link may be used to program the one of more hearing devices 2 and/or the one or more hearing devices 2 can download and/or upload data. For example, the hearing device 2 may be configured to upload data sensed during the operation to the charger 1. Likewise, the charger 1 may be configured to download firmware updates and to parametrise the hearing device 2. Moreover, the charger 1 may be configured to upload data to the cloud for computing, storage and/or support. Furthermore, the charger 1 may be configured to download data from the cloud for firmware updates. Moreover, the charger 1 may serve for protecting the hearing devices 2 stored therein, in particular if the lid 1.2 is closed.

In an exemplary embodiment, when the one or more hearing devices 2 are outside of the charger 1, in particular worn by a user 10, and optionally when the lid 1.2 is closed, the charger 1 may be configured to work as a table microphone or audio streamer, streaming audio data to the one or more hearing devices 2.

The charger 1 may comprise a low latency audio system configured to pick up the voice of at least one person 11 talking in the surroundings and to improve a speech-in-noise use case.

The charger 1 may be connected as an audio streaming device to a supported audio master device in order to stream music, TV sound, radio or any other sound to the one or more hearing devices 2.

In an exemplary embodiment, the charger 1 is part of a hearing aid kit which also comprises the one or more hearing devices 2.

The radio transceiver 4 may be an integrated circuit for wireless communication configured to use a dedicated protocol e.g. Bluetooth Low Energy (BLE), for data sharing with the one or more hearing devices 2 while they are located within the charger 1 and configured to use a different digital communication protocol, which features audio packets, such as proprietary protocols, or BLE audio, for wireless communication with the one or more hearing devices 2 while they are outside the charger 1.

In an exemplary embodiment, the charger 1 may comprise one or more digital sound processors 9 for processing sound data picked up by the one or more microphones 3 prior to forwarding them to the one or more hearing devices 2. The digital sound processor 9 may be configured to reduce ambient noise and/or enhance a signal of interest and/or apply gains to the signal. The digital sound processor might be integrated in the micro controller 8 The digital sound processor 9 may be configured to use a signal processing technique, which may apply artificial intelligence (AI) based on a deep neural network (DNN).

In an exemplary embodiment, the digital sound processor 9 can be configured to be focussed on sound sources in one or more directions. In another embodiment the digital sound processor 9 may be configured to increase the spatial perception of the sound location.

Reduction of the surrounding noise and/or enhancement of the signal of interest, in particular by means of a deep neural network can be performed by one and the same digital sound processor 9 or by separate digital sound processors 9.

The lid 1.2 may comprise an indicator 12, e.g. an optical indicator such as a LED, to indicate that the one or more microphones 3 are active. The indicator might also represent the battery 5 state of charge for the charger 1, and/or for the hearing devices 2. In another embodiment, the indicator 12 may be a sound feedback reproduced through the hearing devices 2 to the user 10.

### List of References

- 1: charger
- 1.1: base
- 1.2: lid
- 2: hearing device
- 3: microphone
- 4: radio transceiver
- 5: battery
- 6: socket
- 7: charging circuitry
- 8: micro controller
- 9: digital sound processor
- 10: user
- 11: person
- 12: indicator

## Claims

1. A charging system comprising a charger (1) for charging one or more hearing devices (2), wherein the charger (1) comprises a charging bay configured to receive the one or more hearing devices (2) for charging and/or storage, one or more microphones (3) and a radio transceiver (4) configured for wireless communication with the one or more hearing devices (2), wherein the charger (1) is configured to either work in a charging mode charging the one or more hearing devices (2) or in a table microphone mode forwarding audio data picked up by the one or more microphones (3) to the one or more hearing devices (2) by the radio transceiver (4) if at least one table microphone mode condition is met including that the one or more hearing devices (2) are outside the charging bay.

2. The charging system according to claim 1 , configured for charging the one or more hearing devices (2) in a wireless way or using galvanic contacts

3. The charging system according to claim 1 or 2, comprising a base (1.1) and a lid (1.2) configured to be opened to allow inserting or removing the one or more hearing devices (2) into the charging bay which is located in the base (1.1).

4. The charging system according to claim 3, wherein in charging mode the radio transceiver (4) is configured to establish a wireless link between the charger (1) and the one or more hearing devices (2) to control a charging procedure if at least one charging mode condition is met including that the one or more hearing devices (2) are inside the loading bay.

5. The charging system according to any one of the preceding claims, comprising a visual indicator configured to indicate a mode of operation of the charging system.

6. The charging system according to any one of the preceding claims, wherein another table microphone mode condition is that the one or more hearing devices (2) are worn by a user (10).

7. The charging system according to any one of the preceding claims, wherein another table microphone mode condition is that the lid (1.2) is closed.

8. The charging system according to any one of the preceding claims, wherein in table microphone mode, the charger (1) is furthermore configured to work as an audio streamer, streaming audio data from an audio master device to the one or more hearing devices (2).

9. The charging system according to any one of the preceding claims, wherein in charging mode the charger (1) is configured to use the wireless link to program the one of more hearing devices (2) and/or to allow the one or more hearing devices (2) to download and/or upload data.

10. The charging system according to any one of the preceding claims, further comprising a battery (5) and/or being connectable to an energy source by cable or in a wireless fashion.

11. The charging system according to any one of the preceding claims, wherein the radio transceiver (4) is configured to use Bluetooth Low Energy for communicating with the one or more hearing devices (2) in charging mode and configured to use a different digital communication protocol for wireless communication in table microphone mode.

12. The charging system according to any one of the preceding claims, wherein the charger (1) comprises one or more digital sound processors (9) for processing sound data picked up by the one or microphones (3) prior to forwarding them to the one or more hearing devices (2).

13. The charging system according to claim 12, wherein the digital sound processor (9) is configured to reduce ambient noise and/or enhance a signal of interest and/or apply gains to the signal of interest and/or to be focussed on sound sources in one or more directions.

14. The charging system according to any one of the claims 5 to 13, wherein the visual indicator is an optical indicator (12) configured to indicate that the table microphone mode is active.

15. A charger (1) for a charging system, the charger (1) being configured for charging one or more hearing devices (2), wherein the charger (1) comprises a charging bay configured to receive the one or more hearing devices (2) for charging and/or storage, one or more microphones (3) and a radio transceiver (4) configured for wireless communication with the one or more hearing devices (2), wherein the charger (1) is configured to either work in a charging mode charging the one or more hearing devices (2) or in a table microphone mode forwarding audio data picked up by the one or more microphones (3) to the one or more hearing devices (2) by the radio transceiver (4) if at least one table microphone mode condition is met including that the one or more hearing devices (2) are outside the charging bay.
